# EUROPEAN PATENT SPECIFICATION

(11) **EP 2 877 258 B1**
(45) Date of publication and mention of the grant of the patent: **24.10.2018**
(21) Application number: 12881733.5
(22) Date of filing: 26.07.2012
(51) Int. Cl.: B01D 5/00, B01D 53/14, F01K 17/00, F23J 15/00

(54) **STEAM EFFICIENCY WITH NON DEPLETIVE CONDENSING AND ADIABATIC SOLVENT HEATING**
DAMPFEFFIZIENZ MIT NICHTERSCHÖPFENDER KONDENSATION UND ADIABATISCHER LÖSUNGSMITTELERWÄRMUNG
RENDEMENT DE VAPEUR AVEC CONDENSATION NON DÉPLÉTIVE ET ÉCHAUFFEMENT ADIABATIQUE DE SOLVENT

(43) Date of publication of application: 03.06.2015
(73) Proprietor: Fluor Technologies Corporation, Aliso Viejo, CA 92698 (US)
(72) Inventor: JOHNSON, Dennis W., Simpsonville, South Carolina 29681 (US); BROWN, James H., Simpsonville, South Carolina 29681 (US); PEEPLES, Jon, Taylors, South Carolina 29687 (US)
(74) Representative: Pallini Gervasi, Diego
(86) International application number: PCT/US2012/048394
(87) International publication number: WO 2014/018046

(56) References cited:
- EP-A1- 2 333 256
- EP-A2- 2 333 255
- US-A- 4 160 810
- US-A- 5 344 627
- US-A1- 2004 221 578
- US-A1- 2006 248 890
- US-A1- 2007 256 559
- US-A1- 2009 151 318
- US-A1- 2010 050 637
- US-A1- 2010 205 964
- US-A1- 2012 096 865

## Description

### Field of the Invention

The field of the invention is systems and methods of using turbine exhaust steam to produce a lean solvent.

### Background

The following background description includes information that may be useful in understanding the present invention. It is not an admission that any of the information provided herein is prior art or relevant to the presently claimed invention, or that any publication specifically or implicitly referenced is prior art.

Generally, power plants that are or will be equipped with a carbon dioxide (also referred to as "CO₂") capture system use various configurations for the turbine/boiler steam cycle. One typical turbine cycle comprises high pressure, intermediate pressure, low pressure and boiler feedwater portions where low pressure steam is condensed separately from higher pressure steam. For instance, steam leaving the low pressure and boiler feedwater pump turbine is sent to a condenser to condense the steam, which can be recycled. Steam from another portion of the turbine cycle is condensed in a heat exchanger known as a reboiler and used to heat rich solvent to release CO₂. Consequently, available heat from the low pressure steam is lost because the two steam condensing processes are distinct from one another.

In general, various processes for CO₂ capture and steam cycle integration are known in the art. For example, U.S. Pat. Publ. No. 2007/0256559 to Chen et al. describes separating a gas from a gas stream emitted by a power plant, by injecting a low pressure steam from a turbine into a stripper. However, Chen's process of directly injecting steam into the stripper limits the applicability of Chen's process because the addition of water into the stripper can be undesirable depending on the solvent circuit used.

The United States Patent Application Publication No. US 2012/0096865 A1 discloses a carbon dioxide recovery method and a carbon-dioxide-recovery-type steam power generation system comprising a boiler, a first turbine, an absorption tower, a regeneration tower, a condenser and a compressor as well as a second turbine driving the compressor. Steam that is produced by the cooling water recovering the heat from the carbon dioxide gas in the condenser is supplied to the first turbine or the second turbine.

The European Patent Application EP 2 333 255 A2 discloses a fossil fuel combustion thermal power system including carbon dioxide separation and capture unit. The system comprises a boiler, a steam turbine including a high pressure turbine, and a carbon dioxide separation capture unit including an absorption tower. The system further includes a reproduction tower of an absorbing solution, a back pressure turbine, a reboiler, and a steam pipe.

The European Patent Application EP 2 333 256 A1 discloses a power plant with CO₂ capture and a method for operating said plant. The described power plant comprises a water steam cycle, a plant for capturing CO₂ from exhaust gases and a steam jet ejector. A steam line directs steam of increased pressure from the steam jet ejector to the CO₂ capture plant.

Where a definition or use of a term in a reference is inconsistent or contrary to the definition of that term provided herein, the definition of that term provided herein applies and the definition of that term in the reference does not apply.

Thus, there is still a need for systems and methods of using turbine exhaust steam to heat rich solvent from a CO₂ capture process.

### Summary of the Invention

According to a first aspect of the present invention, it is provided a system according to claim 1 and a method according to claim 6. According to a second aspect of the present invention, it is provided a system according to claim 2 and a method according to claim 8.

Various objects, features, aspects and advantages of the inventive subject matter will become more apparent from the following detailed description of preferred embodiments, along with the accompanying drawing figures in which like numerals represent like components.

### Brief Description of the Drawing

Fig. 1 is a schematic of a power cycle with a high pressure turbine, an intermediate pressure turbine, a low pressure turbine, and a boiler feedwater pump turbine, where a portion of an intermediate pressure stream is diverted to a reboiler for CO₂ capture.
Fig. 2 is a schematic of a system not according to the present invention that regenerates lean solvent using a low pressure stream.
Fig. 3 is a schematic of another embodiment of a system for regenerating lean solvent that uses steam blending to condition a stream to reboiler conditions.
Fig. 4 is a schematic of yet another embodiment of a system for regenerating lean solvent that uses a steam compressor to pressurize a stream to the required reboiler conditions.
Fig. 5 is a schematic of another embodiment of a system for regenerating lean solvent that uses a compressor and a heat exchanger supplying energy to a stream for the required reboiler conditions.
Fig. 6 is a schematic of another embodiment of a system for regenerating lean solvent that uses a compressor and an auxiliary heater to supply energy to a stream to the required conditions for a reboiler.
Fig. 7 is a schematic of another embodiment of a system for regenerating lean solvent that uses a compressor and a blend station to supply energy to a stream to the required reboiler conditions.
Fig. 8 is a flow chart of an embodiment of a method of producing a lean solvent.

### Detailed Description

One should appreciate that the disclosed techniques provide many advantageous technical effects including a reduction in the size of the condenser equipment required to condense the stream fed to the reboiler, energy conservation, and optimization in the integration of CO₂ capture within a power plant.

The following discussion provides many example embodiments of the inventive subject matter. Although each embodiment represents a single combination of inventive elements, the inventive subject matter is considered to include all possible combinations of the disclosed elements. Thus if one embodiment comprises elements A, B, and C, and a second embodiment comprises elements B and D, then the inventive subject matter is also considered to include other remaining combinations of A, B, C, or D, even if not explicitly disclosed.

Generally, a system in accordance with claim 1 or 2 is described that regenerates a lean solvent from a CO₂ rich solvent. The system comprises a power generator, a fluid conditioning unit, and a heat exchanger. The conditioned stream is preferably at a temperature and pressure to allow for regeneration of a lean solvent stream from a CO₂ rich solvent through heat exchange.

According to the first and second aspects of the present invention, a heat exchanger receives the conditioned stream and produces the lean solvent using the conditioned stream. The heat exchange between the conditioned stream and the CO₂ rich solvent can be such that the conditioned stream is condensed. It should be appreciated that using a portion of the first and second low pressure steams for conditioning and, ultimately, heating the CO₂ rich solvent increases the efficiency of the CO₂ capture process because the amount of low pressure steams to process in the condenser downstream from the power generator is reduced, thereby reducing a size and/or duty of a downstream condenser. In addition, intermediate pressure steam can alternatively be used for power generation rather than being diverted to the CO₂ capture process as in prior art processes.

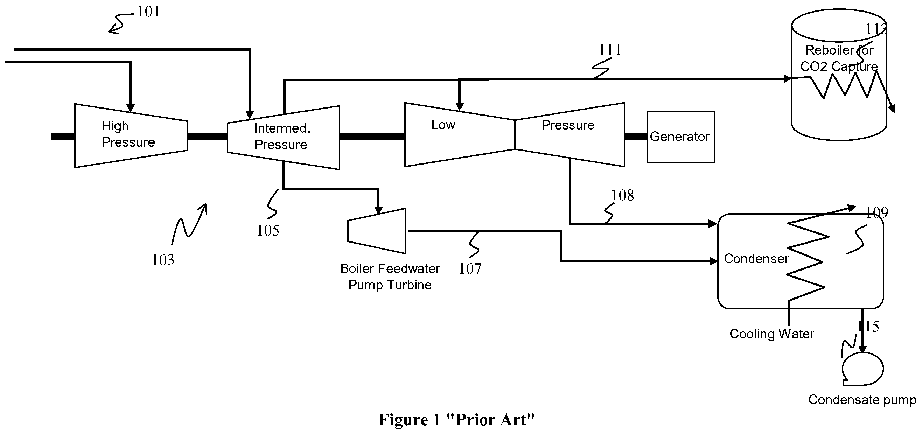

In **Figure 1****,** a prior art power cycle is illustrated that contains a high pressure stream 101 that is fed into a power generator 103 that includes a high pressure turbine, an intermediate pressure turbine, a low pressure turbine, and an optional boiler feedwater pump turbine which could also be driven by an electric motor. The power generator 103 produces an intermediate pressure stream 111, which can be fed into a reboiler 113 and used to heat rich solvent to thereby release CO₂ and regenerate a lean solvent. The intermediate pressure stream 111 for the reboiler is normally a saturated stream at 275.79 kPa - 689.48 kPa (40 - 100 psia) or higher. In one example, steam at 482.63 kPa (70 psia) saturated, about 150.5°C (303 °F), was used in a reboiler. A portion of the intermediate pressure stream 111 can be fed into the low pressure turbine to produce a low pressure stream 108. A second intermediate pressure stream 105 can be fed into the boiler feedwater pump turbine to produce stream 107. Streams 107 and 108 are saturated at a low pressure, and can be sent to a condenser 109. The condensed steam is then returned to the cycle through condensate pump 115.

In typical processes for using steam from a turbine to heat a rich solvent, steam condensing is necessary to (1) achieve the highest possible steam cycle efficiency; and (2) provide the energy required to heat solvent from a carbon dioxide capture in order to release the CO₂. However, as noted in the prior art cycle, separate processes are typically used for the steam condensing required to heat a rich solvent and achieve a high steam cycle efficiency (i.e., Fig. 1, stream 111 is distinct from 107-108). As a result, available heat from the low pressure stream is lost, which could have been used to heat the rich solvent.

Using low pressure steam to heat a rich solvent in a reboiler provides a number of challenges. For example, the steam conditions are different in a condenser than required for a reboiler. Typically, steam to the condenser has a pressure near atmospheric or under a slight vacuum, whereas the reboiler requires a stream having a higher temperature and pressure.

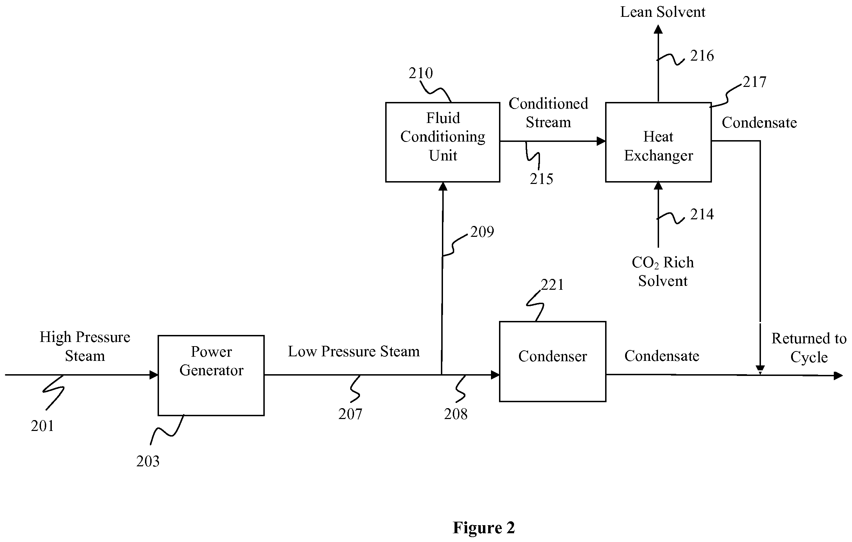

To utilize the low pressure stream, Applicants have discovered that the low pressure stream can be conditioned prior to being fed into a reboiler. In an example not according to the present invention, as shown in **Figure 2****,** high pressure steam 201 is fed into a power generator 203, which thereby produces low pressure steam 207. Typically, the low pressure steam 207 is saturated. A portion 209 of the low pressure steam is fed into a fluid conditioning unit 210, which thereby conditions the steam to a temperature and pressure needed to generate lean solvent from the rich solvent 214 in a reboiler 217 or other heat exchanger. Any commercially suitable conditioning unit(s) could be used to condition the low pressure steam including, for example, a blend station, a compressor, and a heat exchanger. Moreover, the fluid conditioning unit 210 could comprise of a plurality of units to condition the steam to requisite conditions for the reboiler 217. In contemplated systems, the remaining portion of the low pressure steam 208 can be fed to a condenser 221. The percentage of low pressure steam sent to the fluid conditioning unit 210 as opposed to the condenser 221 could vary depending on the requirements needed for the overall process. Furthermore, the condenser 221 could use water, air, a heat transfer medium, or any combination thereof to condense the steam such that the condensate can be pumped back into the cycle.

Preferably, the conditioned stream 215 from the fluid conditioning unit 210 is saturated and has a pressure of between 275.79 kPa - 689.48 kPa (40 to 100 psi). Some or all of the conditioned stream 215 is fed into reboiler 217, where the stream is condensed and a lean solvent 216 is produced by heat exchange contact between the conditioned stream 215 and the rich CO₂ solvent 214. In preferred embodiments, the reboiler 217 is a unit where a lean solvent is produced via heating of a CO₂ rich solvent by use of the conditioned stream. The remainder of the low pressure steam 208 can be fed into a condenser 221 to produce condensate. The condensed streams of the reboiler 217 and condenser 221 can then be returned to the cycle.

The power generator 203 can comprise of high pressure, intermediate pressure, low pressure and/or boiler feedwater pump turbines, although the specific configuration of the power generator 203 can vary depending on the application. In such a configuration, it is contemplated that incoming high pressure steam 201 can enter into one or multiple turbines, and low pressure steam 207 is produced. Moreover, the power generator 203 can produce multiple streams each of which can have a different pressure range, such as a low and an intermediate pressure stream.

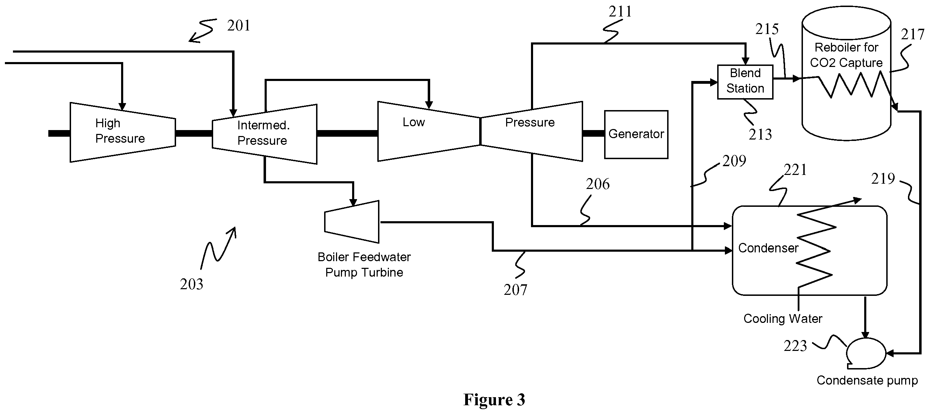

According to the first aspect of the present invention, the fluid conditioning unit 210 comprises a blend station 213 that mixes the portion of the low pressure steam 209 with a second stream 211 having a pressure greater than the low pressure stream. An illustrative embodiment of a system having a fluid conditioning unit comprising a blend station in accordance with the present invention is shown in **Figure 3****.** A high pressure steam 201 enters a power generator 203 comprising high, intermediate, low pressure, and boiler feedwater pump turbines. Low pressure steams 206 and 207 are produced by the power generator 203, from the low pressure and boiler feedwater turbine portions. A portion of the low pressure steam 209 is diverted to a blend station 213. According to the present invention, the portion of the low pressure steam 209 comprises low pressure steams 206 and 207 from the low pressure turbine and the boiler feedwater pump turbine, respectively. Finally, the low pressure steam 206 and 207 could be combined prior to diverting a portion of the low pressure steam 209 to the blend station 213.

The blend station 213 mixes the portion of the low pressure steam 209 with a second stream 211 having a pressure greater than that of the portion of the low pressure steam 209. The second stream 211 is preferably a product of a low pressure turbine, although it is contemplated that the second stream 211 could be generated using any commercially suitable process. It is further contemplated that the second stream 211 can comprise a reheated steam or a product from a supplemental or auxiliary source. If superheated steam is used, then desuperheating can be used to saturate the stream. The blending of the second stream 211 and the portion of the low pressure steam 209 produces a conditioned stream 215, preferably at a temperature and pressure sufficient to allow for generation of a lean solvent from a CO₂ rich solvent in reboiler 217. From the reboiler 217, the conditioned stream 215 is condensed 219 and fed to condensate pump 223, which can send the condensate back to the cycle.

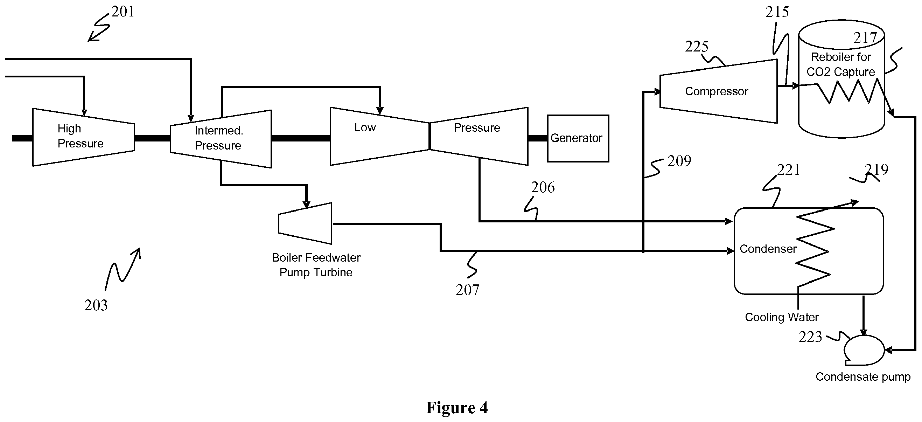

According to the second aspect of the present invention, the fluid conditioning unit 210 comprises a compressor 225, such as shown in **Figure 4****.** With respect to similarly numbered elements, the description above applies. Similar to the other embodiments, a high pressure steam is fed into a power generator that produces a low pressure steam. A compressor 225 is used to compress a portion of the low pressure steam 209. The compressor 225 can be a steam or electrical driven compressor, a blower, a fan, or other device suitable to pressurize the portion of the low pressure steam 209 and provide the conditions necessary for the reboiler 217 in the conditioned stream 215.

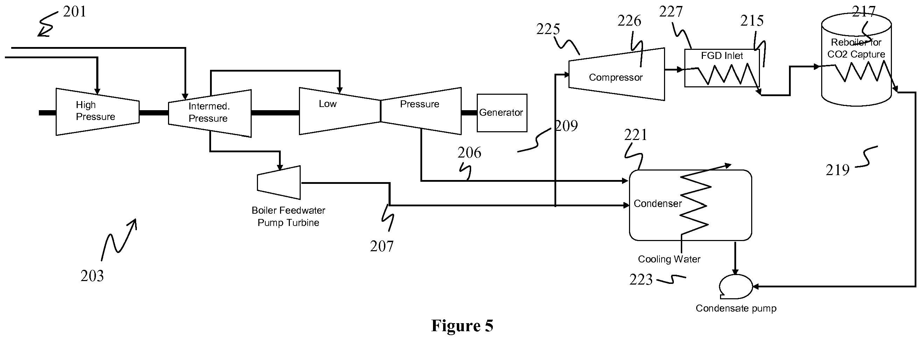

In still other contemplated embodiments shown in **Figure 5****,** a compressor 225 fluidly coupled to a heat exchanger 227 can be used to condition low pressure steam from the power generator 203. The heat exchanger 227 can advantageously be used to supply additional thermal energy to compressed stream 226. In one configuration, the heat exchanger can be configured to allow for heat exchange contact between compressed stream 226 and a heated stream from an upstream process. In preferred embodiments, the heated stream can comprise a flue gas stream. Typically, in such configuration the likely location would be upstream of a flue gas desulfurization (FGD) unit, where the flue gas temperature is typically about 126.7°C - 160°C (260-320 °F) depending upon the fuel and design. However, use of the flue gas as a heat exchange medium may require that the heat exchanger be made from corrosion resistant materials due to the presence of acid gases in the flue gas, such as SO₃, SO₂, and HCl.

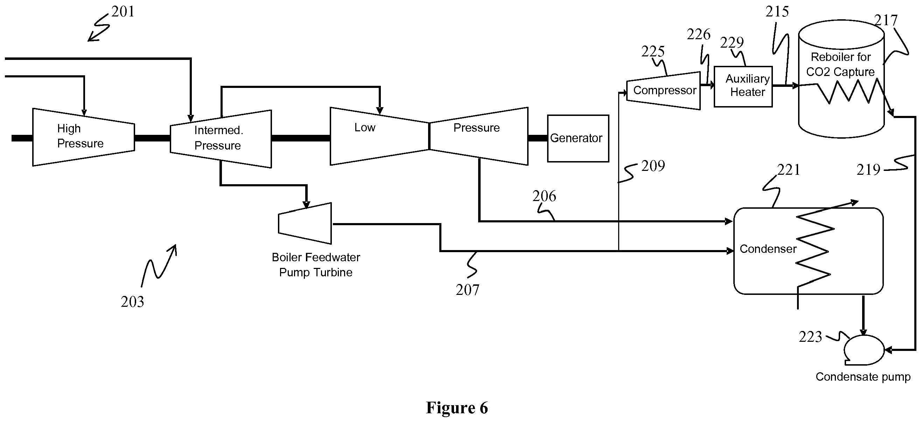

In another preferred embodiment, the compressor 225 can be coupled to an auxiliary heater 229 wherein the auxiliary heater receives the compressed stream 226 and produces the conditioned stream 215 as shown in **Figure 6****.** Further, the auxiliary heater 229 preferably comprises utilizing heat from an external source or heat from at least one of an airheater, an outlet of a fabric filter or an electrostatic precipitator, or inlet stream of a FGD unit.

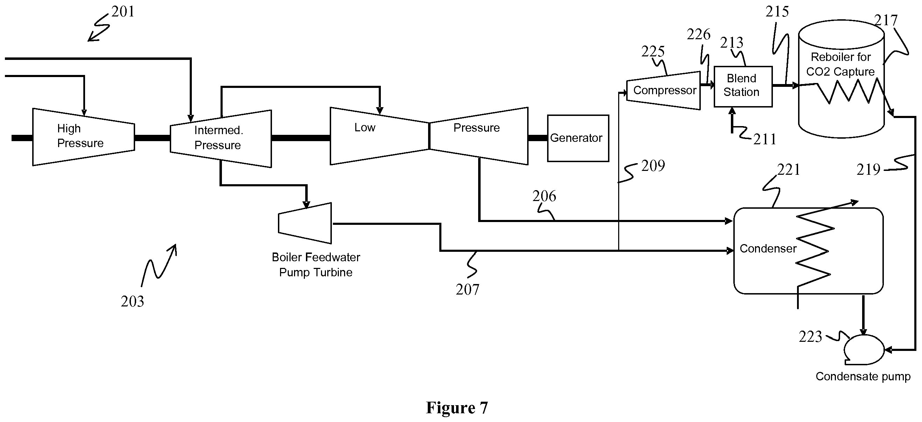

Another example can comprise of the conditioning unit 210 including a blend station 213 that is configured to receive a compressed stream 226 from the compressor 225 and a second stream 211 wherein a conditioned stream is produced as shown in **Figure 7****.**

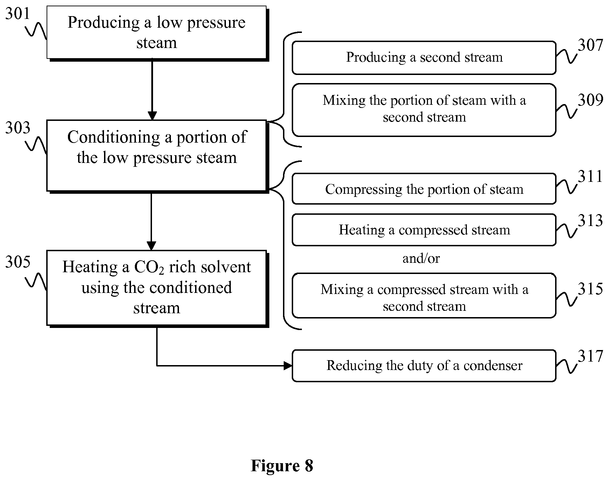

According to claims 6 and 8 of the present application, methods of regenerating a lean solvent from a CO₂ rich solvent are provided. As shown in a schematic overview according to **Figure 8****,** the methods according to claims 6 and 8 include the steps of: (1) producing a low pressure steam in a power generator 301; (2) conditioning at least a portion of the low pressure steam in a fluid conditioning unit to produce a conditioned stream 303; and (3) heating a CO₂ rich solvent using the conditioned stream to produce a lean solvent 305. In applying the method according to claim 6 or 8, energy production of the power generator is increased by extracting pressure from the intermediate pressure stream rather than feed the intermediate pressure steam to the reboiler. In addition, the amount of power required for CO₂ sequestration is reduced. Furthermore, by using the heat from the low pressure steam that is normally rejected to the atmosphere, the efficiency is improved and the costs are reduced.

Furthermore, the conditioning of a portion of the low pressure steam 303 can comprise of a plurality of steps. For instance, the conditioning can comprise of mixing a portion of the low pressure steam with a second stream 309 using a blend station. In such process, it is contemplated that a step of producing the second stream 307 can comprise of using a low pressure turbine, a feedwater heater, and a superheater steam generator. Moreover, the conditioning of a portion of low pressure steam 303 can comprise of a compressor to compress the portion 311. In such configuration, it is contemplated that a compressed stream produced by the compressor can be either heated 313 and/or mixed with another stream 315. However, such methods can be configured in a manner such that the mere compressing of the portion of the low pressure stream produces a conditioned stream. Finally, the methods provided can reduce the duty of a condenser 317 downstream from the power generator.

Many of the individual components of this method have been described above, and with respect to those components, the description above applies. Moreover, it is contemplated that the method described above can include at least the combinations of the system described above. For example, a flue gas stream, typically upstream from a flue gas conditioning unit, can exchange heat with a compressed stream from a compressor, such that a conditioning stream is produced.

It is contemplated that the systems and methods described above can be applied in operations other than power generation and CO₂ capture. For instance, the systems and methods can be applied to fossil fuel fired plants that have a condenser and carbon dioxide capture, including those fired with coal, gas, oil, coke, diesel, oil-derived fuels, bitumen, etc. Additionally, applications with biomass firing, waste to energy, biodiesel, and ethanol can be modified to better benefit in energy management using the techniques described above.

As used in the description herein and throughout the claims that follow, the meaning of "a," "an," and "the" includes plural reference unless the context clearly dictates otherwise. Also, as used in the description herein, the meaning of "in" includes "in" and "on" unless the context clearly dictates otherwise.

The recitation of ranges of values herein is merely intended to serve as a shorthand method of referring individually to each separate value falling within the range. Unless otherwise indicated herein, each individual value is incorporated into the specification as if it were individually recited herein. All methods described herein can be performed in any suitable order unless otherwise indicated herein or otherwise clearly contradicted by context. The use of any and all examples, or exemplary language (e.g. "such as") provided with respect to certain embodiments herein is intended merely to better illuminate the invention and does not pose a limitation on the scope of the invention otherwise claimed. No language in the specification should be construed as indicating any non-claimed element essential to the practice of the invention.

As used herein, and unless the context dictates otherwise, the term "coupled to" is intended to include both direct coupling (in which two elements that are coupled to each other contact each other) and indirect coupling (in which at least one additional element is located between the two elements). Therefore, the terms "coupled to" and "coupled with" are used synonymously.

## Claims

1. A system that regenerates a lean solvent from a CO₂ rich solvent, comprising:
a power generator (203) comprising a high pressure turbine, an intermediate pressure turbine and a low pressure turbine; wherein the power generator (203) is configured
to receive a high pressure steam (201) in the high pressure turbine and in the intermediate pressure turbine,
to produce a first intermediate pressure steam and a second intermediate pressure steam from the intermediate pressure turbine, and
to produce a first low pressure steam (206) from the low pressure turbine, wherein the low pressure turbine receives the first intermediate pressure steam;
a boiler feedwater pump turbine configured to produce a second low pressure steam (207) from the second intermediate pressure steam;
a fluid conditioning unit configured to receive a first portion of the second low pressure (207) steam and a first portion of the first low pressure steam (206) and produce a conditioned stream (215);
a condenser (221) configured to receive a second portion of the second low pressure steam (207) and a second portion of the first low pressure steam (206), and to produce a condensate; and
a heat exchanger (217) configured to (a) receive the conditioned stream (215) and a CO₂ rich solvent, and (b) produce a lean solvent from the CO₂ rich solvent using the conditioned stream (215),
wherein the fluid conditioning unit comprises a blend station (213) configured to mix at least the first portion of the second low pressure steam (207) and the first portion of the first low pressure steam (206) with a second stream (211) having a pressure that is greater than the first and second low pressure steams (206, 207) but less than the high pressure steam (201), wherein the second stream (211) comprises a product from at least one of a low pressure turbine, a feedwater heater, and a superheated steam generator;
further wherein the condensate is received from the condenser (221) and pumped by a condensate pump (223), and wherein a condensed conditioned stream (219) is received from the heat exchanger (217) and pumped by the condensate pump (223).

2. A system that regenerates a lean solvent from a CO₂ rich solvent, comprising:
a power generator (203) comprising a high pressure turbine, an intermediate pressure turbine and a low pressure turbine; wherein the power generator (203) is configured
to receive a high pressure steam (201) in the high pressure turbine and in the intermediate pressure turbine,
to produce a first intermediate pressure steam and a second intermediate pressure steam from the intermediate pressure turbine, and
to produce a first low pressure steam (206) from the low pressure turbine, wherein the low pressure turbine receives the first intermediate pressure steam;
a boiler feedwater pump turbine configured to produce a second low pressure steam (207) from the second intermediate pressure steam;
a fluid conditioning unit configured to receive a first portion of the second low pressure (207) steam and a first portion of the first low pressure steam (206) and produce a conditioned stream (215);
a condenser (221) configured to receive a second portion of the second low pressure steam (207) and a second portion of the first low pressure steam (206), and to produce a condensate; and
a heat exchanger (217) configured to (a) receive the conditioned stream (215) and a CO2 rich solvent, and (b) produce a lean solvent from the CO₂ rich solvent using the conditioned stream (215);
wherein the fluid conditioning unit comprises a compressor (225) configured to receive the first portion of the second low pressure steam (207) and the first portion of the first low pressure steam (206);
further wherein the condensate is received from the condenser (221) and pumped by a condensate pump (223), and wherein a condensed conditioned stream (219) is received from the heat exchanger (217) and pumped by the condensate pump (223).

3. The system according to claim 2, wherein the fluid conditioning unit further comprises a heat exchanger (227) configured to receive a compressed stream (226) from the compressor (225) and produce the conditioned stream (215) via heat exchange contact,
more preferably wherein the conditioned stream (215) is produced via heat exchange contact with a flue gas stream.

4. The system of claim 2, wherein the fluid conditioning unit further comprises an auxiliary heater (229) configured to receive a compressed stream (226) from the compressor (227) and produce the conditioned stream (215).

5. The system of claim 2, wherein the fluid conditioning unit further comprises a blend station (213) configured to (a) receive a compressed stream (226) from the compressor (227) and a second stream (211), and (b) to produce the conditioned stream (215).

6. A method of regenerating a lean solvent from a CO₂ rich solvent, comprising:
receiving a high pressure steam (201) in a high pressure turbine of a power generator (203) and in an intermediate pressure turbine of the power generator (203);
producing first and second intermediate pressure steams from the intermediate pressure turbine;
receiving the first intermediate pressure steam in a low pressure turbine of the power generator (203);
producing a first low pressure steam (206) from the low pressure turbine;
producing a second low pressure steam (207) from the second intermediate pressure steam using a boiler feedwater pump turbine;
conditioning a first portion of the second low pressure steam (207) and a first portion of the first low pressure steam (206) in a fluid conditioning unit to produce a conditioned stream (215);
condensing a second portion of the second low pressure steam (207) and a second portion of the first low pressure steam (206) in a condenser (221) to produce a condensate; and
heating a CO₂ rich solvent using the conditioned stream (215) in a heat exchanger (217) to produce a lean solvent;
wherein conditioning the first portion of the second low pressure steam (207) and the first portion of the first low pressure steam (206) further comprises mixing the first portion of second low pressure steam (207) and the first portion of the first low pressure steam (206) with a second stream (211) using a blend station (213), wherein the second stream (211) has a pressure that is greater than a pressure of the first and second low pressure steams (206, 207);
further wherein the condensate is received from the condenser (221) and pumped by a condensate pump (223), and wherein a condensed conditioned stream (219) is received from the heat exchanger (217) and pumped by the condensate pump (223).

7. The method of claim 6, further comprising a step of producing the second stream (211) using at least one of the low pressure turbine, a feedwater heater, and a superheated steam generator.

8. A method of regenerating a lean solvent from a CO₂ rich solvent, comprising:
receiving a high pressure steam (201) in a high pressure turbine of a power generator (203) and in an intermediate pressure turbine of the power generator (203);
producing first and second intermediate pressure steams from the intermediate pressure turbine;
receiving the first intermediate pressure steam in a low pressure turbine of the power generator (203);
producing a first low pressure steam (206) from the low pressure turbine;
producing a second low pressure steam (207) from the second intermediate pressure steam using a boiler feedwater pump turbine;
conditioning a first portion of the second low pressure steam (207) and a first portion of the first low pressure steam (206) in a fluid conditioning unit to produce a conditioned stream (215);
condensing a second portion of the second low pressure steam (207) and a second portion of the first low pressure steam (206) in a condenser (221) to produce a condensate; and
heating a CO₂ rich solvent using the conditioned stream (215) in a heat exchanger (217) to produce a lean solvent;
wherein the fluid conditioning unit comprises a compressor (225) configured to receive the first portion of the second low pressure steam (207) and the first portion of the first low pressure steam (206) and to produce a compressed stream;
further wherein the condensate is received from the condenser (221) and pumped by a condensate pump (223), and wherein a condensed conditioned stream (219) is received from the heat exchanger (217) and pumped by the condensate pump (223).

9. The method of claim 8, wherein the compressed stream is the conditioned stream (215), or wherein the step of conditioning the first portion of the second low pressure steam (207) and the first portion of the first low pressure steam (206) further comprises:
heating the compressed stream produced by the compressor (225) via heat exchange contact with a flue gas stream upstream of a flue gas conditioning unit to produce the conditioned stream (215), or
heating a compressed stream (226) from the compressor (225) using an auxiliary heater (229) to produce the conditioned stream (215), or
mixing a compressed stream (226) from the compressor (225) and a second stream (211) to produce the conditioned stream (215), and wherein the second stream (211) has a pressure that is greater than a pressure of the first and second low pressure steams (206, 207).

10. The method of claim 6 or 8, further comprising reducing a duty of the condenser (221).

## Patentansprüche

1. System, bei welchem eine schwache Lösung aus einer stark CO₂-haltigen Lösung rückgewonnen wird, wobei dieses System umfasst:
- eine Kraftanlage (203), welche eine Hochdruckturbine, eine Mitteldruckturbine und eine Niederdruckturbine umfasst, wobei diese Kraftanlage (203) dergestalt ausgelegt ist, dass sie
Hochdruckdampf (201) in der Hochdruckturbine und in der Mitteldruckturbine aufnimmt, um einen ersten Mitteldruckdampf und einen zweiten Mitteldruckdampf aus der Mitteldruckturbine zu erzeugen, und um
einen ersten Niederdruckdampf (206) aus der Niederdruckturbine zu erzeugen, wobei die Niederdruckturbine den ersten Mitteldruckdampf aufnimmt;
- eine Kesselspeisewasser-Pumpturbine, welche dergestalt ausgelegt ist, dass sie einen zweiten Niederdruckdampf (207) aus dem zweiten Mitteldruckdampf erzeugt;
- eine Flüssigkonditionieranlage, welche dergestalt ausgelegt ist, dass sie einen ersten Teil des zweiten Niederdruckdampfes (207) und einen ersten Teil des ersten Niederdruckdampfes (206) aufnimmt und einen konditionierten Strahl (215) erzeugt;
- einen Kondensator (221), welcher dergestalt ausgelegt ist, dass er einen zweiten Teil des zweiten Niederdruckdampfes (207) und einen zweiten Teil des ersten Niederdruckdampfes (206) aufnimmt und ein Kondensat erzeugt; und
- einen Wärmetauscher (217), welcher dergestalt ausgelegt ist, dass er (a) den konditionierten Strahl (215) und eine stark CO₂-haltige Lösung aufnimmt und (b) eine schwache Lösung aus der stark CO₂-haltigen Lösung unter Verwendung des konditionierten Strahls (215) erzeugt,
wobei die Flüssigkonditionieranlage eine Mischstation (213) umfasst, welche dergestalt ausgelegt ist, dass zumindest der erste Teil des zweiten Niederdruckdampfes (207) und der erste Teil des ersten Niederdruckdampfes (206) mit einem zweiten Strahl (211) gemischt werden, welcher einen Druck aufweist, der höher ist als der des ersten und des zweiten Niederdruckdampfes (206, 207), aber niedriger ist als der des Hochdruckdampfes (201), wobei der zweite Strahl (211) ein Abgangsprodukt von mindestens einer der Anlagen Niederdruckturbine, Speisewassererhitzer und Generator für überhitzten Dampf umfasst. und
wobei außerdem das Kondensat aus dem Kondensator (221) aufgenommen und mittels einer Kondensatpumpe (223) gepumpt wird und wobei ein kondensierter konditionierter Strahl (219) aus dem Wärmetauscher (217) aufgenommen und von der Kondensatpumpe (223) gepumpt wird.

2. System, bei welchem eine schwache Lösung aus einer stark CO₂-haltigen Lösung rückgewonnen wird, wobei dieses System umfasst:
- eine Kraftanlage (203), welche eine Hochdruckturbine, eine Mitteldruckturbine und eine Niederdruckturbine umfasst, wobei diese Kraftanlage (203) dergestalt ausgelegt ist, dass sie
Hochdruckdampf (201) in der Hochdruckturbine und in der Mitteldruckturbine aufnimmt, um einen ersten Mitteldruckdampf und einen zweiten Mitteldruckdampf aus der Mitteldruckturbine zu erzeugen, und um
einen ersten Niederdruckdampf (206) aus der Niederdruckturbine zu erzeugen, wobei die Niederdruckturbine den ersten Mitteldruckdampf aufnimmt;
- eine Kesselwasser-Pumpturbine, welche dergestalt ausgelegt ist, dass sie einen zweiten Niederdruckdampf (207) aus dem zweiten Mitteldruckdampf erzeugt;
- eine Flüssigkonditionieranlage, welche dergestalt ausgelegt ist, dass sie einen ersten Teil des zweiten Niederdruckdampfes (207) und einen ersten Teil des ersten Niederdruckdampfes (206) aufnimmt und einen konditionierten Strahl (215) erzeugt;
- einen Kondensator (221), welcher dergestalt ausgelegt ist, dass er einen zweiten Teil des zweiten Niederdruckdampfes (207) und einen zweiten Teil des ersten Niederdruckdampfes (206) aufnimmt und ein Kondensat erzeugt; und
- einen Wärmetauscher (217), welcher dergestalt ausgelegt ist, dass er (a) den konditionierten Strahl (215) und eine stark CO₂-haltige Lösung aufnimmt und (b) eine schwache Lösung aus der stark CO₂-haltigen Lösung unter Verwendung des konditionierten Strahls (215) erzeugt,
wobei die Flüssigkonditionieranlage einen Kompressor (225) umfasst, welcher dergestalt ausgelegt ist, dass er den ersten Teil des zweiten Niederdruckdampfes (207) und den ersten Teil des ersten Niederdruckdampfes (206) aufnimmt, und
wobei außerdem das Kondensat aus dem Kondensator (221) aufgenommen und mittels einer Kondensatpumpe (223) gepumpt wird und wobei ein kondensierter konditionierter Strahl (219) aus dem Wärmetauscher (217) aufgenommen und von der Kondensatpumpe (223) gepumpt wird.

3. System nach Anspruch 2, bei welchem die Flüssigkonditionieranlage außerdem einen Wärmetauscher (227) umfasst, welcher dergestalt ausgelegt ist, dass er einen komprimierten Strahl (226) vom Kompressor (225) aufnimmt und über Wärmetauschkontakt den konditionierten Strahl (215) erzeugt,
wobei stärker vorzuziehen ist, dass der konditionierte Strahl (215) über Wärmetauschkontakt mit einem Rauchgasstrom erzeugt wird.

4. System nach Anspruch 2, bei welchem die Flüssigkonditionieranlage außerdem ein Hilfsheizgerät (229) umfasst, welches dergestalt ausgelegt ist, dass es einen komprimierten Strahl (226) vom Kompressor (227) aufnimmt und den konditionierten Strahl (215) erzeugt.

5. System nach Anspruch 2, bei welchem die Flüssigkonditionieranlage außerdem eine Mischstation (213) umfasst, welche dergestalt ausgelegt ist, dass sie (a) einen komprimierten Strahl (226) vom Kompressor (227) und einen zweiten Strahl (211) aufnimmt und (b) den konditionierten Strahl (215) erzeugt.

6. Verfahren zur Rückgewinnung einer schwachen Lösung aus einer stark CO₂-haltigen Lösung, wobei dieses Verfahren umfasst:
- die Aufnahme eines Hochdruckdampfes (201) in einer Hochdruckturbine einer Kraftanlage (203) und in einer Mitteldruckturbine der Kraftanlage (203);
- die Erzeugung eines ersten und eines zweiten Mitteldruckdampfes aus der Mitteldruckturbine;
- die Aufnahme des ersten Mitteldruckdampfes in einer Niederdruckturbine der Kraftanlage (203);
- die Erzeugung eines ersten Niederdruckdampfes (206) aus der Niederdruckturbine;
- die Erzeugung eines zweiten Niederdruckdampfes (207) aus dem zweiten Mitteldruckdampf unter Verwendung einer Kesselspeisewasser-Pumpturbine;
- die Konditionierung eines ersten Teils des zweiten Niederdruckdampfes (207) und eines ersten Teils des ersten Niederdruckdampfes (206) in einer Flüssigkonditioniereinheit, um einen konditionierten Strahl (215) zu erzeugen;
- die Kondensation eines zweiten Teils des zweiten Niederdruckdampfes (207) und eines zweiten Teils des ersten Niederdruckdampfes (206) in einem Kondensator (221), um ein Kondensat zu erzeugen; und
- das Erhitzen einer stark CO₂-haltigen Lösung unter Verwendung des konditionierten Strahls (215) in einem Wärmetauscher (217), um eine schwache Lösung zu erzeugen,
wobei die Konditionierung des ersten Teils des zweiten Niederdruckdampfes (207) und des ersten Teils des ersten Niederdruckdampfes (206) außerdem das Mischen des ersten Teils des zweiten Niederdruckdampfes (207) und des ersten Teils des ersten Niederdruckdampfes (206) mit einem zweiten Strahl (211) unter Verwendung einer Mischstation (213) umfasst, wobei der zweite Strahl (211) einen Druck aufweist, der höher ist als der Druck des ersten und des zweiten Niederdruckdampfes (206, 207), und
wobei außerdem das Kondensat aus dem Kondensator (221) aufgenommen und mittels einer Kondensatpumpe (223) gepumpt wird und wobei ein kondensierter konditionierter Strahl (219) aus dem Wärmetauscher (217) aufgenommen und von der Kondensatpumpe (223) gepumpt wird.

7. Verfahren nach Anspruch 6, welches außerdem einen Schritt der Erzeugung des zweiten Strahls (211) unter Verwendung von mindestens einer der Anlagen Niederdruckturbine, Speisewassererhitzer und Generator für überhitzten Dampf umfasst.

8. Verfahren zur Rückgewinnung einer schwachen Lösung aus einer stark CO₂-haltigen Lösung, wobei dieses Verfahren umfasst:
- die Aufnahme eines Hochdruckdampfes (201) in einer Hochdruckturbine einer Kraftanlage (203) und in einer Mitteldruckturbine der Kraftanlage (203);
- die Erzeugung eines ersten und eines zweiten Mitteldruckdampfes aus der Mitteldruckturbine;
- die Aufnahme des ersten Mitteldruckdampfes in einer Niederdruckturbine der Kraftanlage (203);
- die Erzeugung eines ersten Niederdruckdampfes (206) aus der Niederdruckturbine;
- die Erzeugung eines zweiten Niederdruckdampfes (207) aus dem zweiten Mitteldruckdampfes unter Verwendung einer Kesselspeisewasser-Pumpturbine;
- die Konditionierung eines ersten Teils des zweiten Niederdruckdampfes (207) und eines ersten Teils des ersten Niederdruckdampfes (206) in einer Flüssigkonditioniereinheit, um einen konditionierten Strahl (215) zu erzeugen;
- die Kondensation eines zweiten Teils des zweiten Niederdruckdampfes (207) und eines zweiten Teils des ersten Niederdruckdampfes (206) in einem Kondensator (221), um ein Kondensat zu erzeugen; und
- das Erhitzen einer stark CO₂-haltigen Lösung unter Verwendung des konditionierten Strahls (215) in einem Wärmetauscher (217), um eine schwache Lösung zu erzeugen,
wobei die Flüssigkonditioniereinheit einen Kompressor (225) asst, welcher dergestalt ausgelegt ist, dass er den ersten Teil des zweiten Niederdruckdampfes (207) und den ersten Teil des ersten Niederdruckdampfes (206) aufnimmt und einen komprimierten Strahl erzeugt, und
wobei außerdem das Kondensat aus dem Kondensator (221) aufgenommen und von einer Kondensatpumpe (223) gepumpt wird und wobei ein kondensierter konditionierter Strahl (219) aus dem Wärmetauscher (217) aufgenommen und von der Kondensatpumpe (223) gepumpt wird.

9. Verfahren nach Anspruch 8, bei welchem der komprimierte Strahl der konditionierte Strahl (215) ist oder bei welchem der Schritt der Konditionierung des ersten Teils des zweiten Niederdruckdampfes (207) und des ersten Teils des ersten Niederdruckdampfes (206) außerdem umfasst:
das Erhitzen des vom Kompressor (225) erzeugten komprimierten Strahls über Wärmetauschkontakt mit einem Rauchgasstrom auf der Anströmseite einer Rauchgas-Konditioniereinheit, um den konditionierten Strahl (215) zu erzeugen, oder
das Erhitzen eines komprimierten Strahls (226) vom Kompressor (225) unter Verwendung eines Hilfsheizgerätes (229), um den konditionierten Strahl (215) zu erzeugen, oder
das Mischen eines komprimierten Strahls (226) vom Kompressor (225) und eines zweiten Strahls (211), um den konditionierten Strahl (215) zu erzeugen, und wobei der zweite Strahl (211) einen Druck aufweist, der höher ist als der Druck des ersten und des zweiten Niederdruckdampfes (206, 207).

10. Verfahren nach Anspruch 6 oder 8, welches außerdem die Herabsetzung der relativen Einschaltdauer des Kondensators (221) umfasst.

## Revendications

1. Système qui régénère un solvant pauvre à partir d'un solvant riche en CO₂, comprenant :
un générateur de puissance (203) comprenant une turbine à haute pression, une turbine à pression intermédiaire et une turbine à basse pression ; dans lequel le générateur de puissance (203) est configuré
pour recevoir une vapeur à haute pression (201) dans la turbine à haute pression et dans la turbine à pression intermédiaire,
pour produire une première vapeur à pression intermédiaire et une seconde vapeur à pression intermédiaire de la turbine à pression intermédiaire, et
pour produire une première vapeur à basse pression (206) de la turbine à basse pression, dans lequel la turbine à basse pression reçoit la première vapeur à pression intermédiaire ;
une turbine de pompe d'eau d'alimentation de chaudière configurée pour produire une seconde vapeur à basse pression (207) à partir de la seconde vapeur à pression intermédiaire ;
une unité de conditionnement de fluide configurée pour recevoir une première partie de la seconde vapeur à basse pression (207) et une première partie de la première vapeur à basse pression (206) et pour produire un flux conditionné (215) ;
un condenseur (221) configuré pour recevoir une seconde partie de la seconde vapeur à basse pression (207) et une seconde partie de la première vapeur à basse pression (206), et pour produire un condensat ; et
un échangeur de chaleur (217) configuré pour (a) recevoir le flux conditionné (215) et un solvant riche en CO₂, et pour (b) produire un solvant pauvre à partir du solvant riche en CO₂ en utilisant le flux conditionné (215),
dans lequel l'unité de conditionnement de fluide comprend une station de mélange (213) configurée pour mélanger au moins la première partie de la seconde vapeur à basse pression (207) et la première partie de la première vapeur à basse pression (206) avec un second flux (211) ayant une pression qui est supérieure à la première et à la seconde vapeur à basse pression (206, 207) mais inférieure à la vapeur à haute pression (201), dans laquelle le second flux (211) comprend un produit d'un au moins d'une de turbine à basse pression, un réchauffeur d'eau d'alimentation, et un générateur de vapeur surchauffée ;
dans lequel en outre le condensat est reçu du condenseur (221) et pompé par une pompe à condensat (223), et dans lequel un flux conditionné condensé (219) est reçu de l'échangeur de chaleur (217) et pompé par la pompe à condensat (223).

2. Système qui régénère un solvant pauvre à partir d'un solvant riche en CO₂, comprenant :
un générateur de puissance (203) comprenant une turbine à haute pression, une turbine à pression intermédiaire et une turbine à basse pression ; dans lequel le générateur de puissance (203) est configuré
pour recevoir une vapeur à haute pression (201) dans la turbine à haute pression et dans la turbine à pression intermédiaire,
pour produire une première vapeur à pression intermédiaire et une seconde vapeur à pression intermédiaire de la turbine à pression intermédiaire, et
pour produire une première vapeur à basse pression (206) de la turbine à basse pression, dans lequel la turbine à basse pression reçoit la première vapeur à pression intermédiaire ;
une turbine de pompe d'eau d'alimentation de chaudière configurée pour produire une seconde vapeur à basse pression (207) à partir de la seconde vapeur à pression intermédiaire ;
une unité de conditionnement de fluide configurée pour recevoir une première partie de la seconde vapeur à basse pression (207) et une première partie de la première vapeur à basse pression (206) et pour produire un flux conditionné (215) ;
un condenseur (221) configuré pour recevoir une seconde partie de la seconde vapeur à basse pression (207) et une seconde partie de la première vapeur à basse pression (206), et pour produire un condensat ; et
un échangeur de chaleur (217) configuré pour (a) recevoir le flux conditionné (215) et un solvant riche en CO₂, et pour (b) produire un solvant pauvre à partir d'un solvant riche en CO₂ en utilisant le flux conditionné (215) ;
dans lequel l'unité de conditionnement de fluide comprend un compresseur (225) configuré pour recevoir la première partie de la seconde vapeur à basse pression (207) et la première partie de la première vapeur à basse pression (206) ;
dans lequel en outre le condensat est reçu du condenseur (221) et pompé par une pompe à condensat (223), et dans lequel un flux conditionné condensé (219) est reçu de l'échangeur de chaleur (217) et pompé par la pompe à condensat (223).

3. Système selon la revendication 2, dans lequel l'unité de conditionnement de fluide comprend en outre un échangeur de chaleur (227) configuré pour recevoir un flux comprimé (226) du compresseur (225) et pour produire le flux conditionné (215) par contact d'échange de chaleur,
de préférence dans lequel le flux conditionné (215) est produit par contact d'échange de chaleur avec un flux de gaz de combustion.

4. Système de la revendication 2, dans lequel l'unité de conditionnement de fluide comprend en outre un rechauffeur auxiliaire (229) configuré pour recevoir un flux comprimé (226) du compresseur (227) et pour produire le flux conditionné (215).

5. Système de la revendication 2, dans lequel l'unité de conditionnement de fluide comprend en outre une station de mélange (213) configurée pour (a) recevoir un flux comprimé (226) du compresseur (227) et un second flux (211), et (b) pour produire le flux conditionné (215).

6. Méthode pour régénérer un solvant pauvre à partir d'un solvant riche en CO₂, comprenant :
la réception d'une vapeur à haute pression (201) dans une turbine à haute pression d'un générateur de puissance (203) et dans une turbine à pression intermédiaire du générateur de puissance (203) ;
la production des première et seconde vapeurs à pression intermédiaire de la turbine à pression intermédiaire ;
la réception de la première vapeur à pression intermédiaire dans une turbine à basse pression du générateur de puissance (203) ;
la production d'une première vapeur à basse pression (206) de la turbine à basse pression ;
la production d'une seconde vapeur à basse pression (207) de la seconde vapeur à pression intermédiaire en utilisant une turbine de pompe d'eau d'alimentation de chaudière ;
le conditionnement d'une première partie de la seconde vapeur à basse pression (207) et d'une première partie de la première vapeur à basse pression (206) dans une unité de conditionnement de fluide pour produire un flux conditionné (215) ;
la condensation d'une seconde partie de la seconde vapeur à basse pression (207) et d'une seconde partie de la première vapeur à basse pression (206) dans un condenseur (221) pour produire un condensat ; et
le chauffage d'un solvant riche en CO₂ en utilisant le flux conditionné (215) dans un échangeur de chaleur (217) pour produire un solvant pauvre ;
dans lequel le conditionnement de la première partie de la seconde vapeur à basse pression (207) et de la première partie de la première vapeur à basse pression (206) comprend en outre le mélange de la première partie de la seconde vapeur à basse pression (207) et de la première partie de la première vapeur à basse pression (206) avec un second flux (211) en utilisant une station de mélange (213), dans laquelle le second flux (211) a une pression qui est supérieure à une pression de la première et de la seconde vapeur à basse pression (206, 207) ;
dans lequel en outre le condensat est reçu du condenseur (221) et pompé par une pompe à condensat (223), et dans lequel un flux conditionné condensé (219) est reçu de l'échangeur de chaleur (217) et pompé par la pompe à condensat (223).

7. Méthode de la revendication 6, comprenant en outre une étape de production du second flux (211) en utilisant l'un au moins d'une turbine à basse pression, un rechauffeur d'eau d'alimentation et un générateur de vapeur surchauffée.

8. Méthode pour régénérer un solvant pauvre à partir du solvant riche en CO₂, comprenant :
la réception d'une vapeur à haute pression (201) dans une turbine à haute pression d'un générateur de puissance (203) et dans une turbine à pression intermédiaire du générateur de puissance (203) ;
la production des première et seconde vapeurs à pression intermédiaire de la turbine à pression intermédiaire ;
la réception de la première vapeur à pression intermédiaire dans une turbine à basse pression du générateur de puissance (203) ;
la production d'une première vapeur à basse pression (206) de la turbine à basse pression ;
la production d'une seconde vapeur à basse pression (207) de la seconde vapeur à pression intermédiaire en utilisant une turbine de pompe d'eau d'alimentation de chaudière ;
le conditionnement d'une première partie de la seconde vapeur à basse pression (207) et d'une première partie de la première vapeur à basse pression (206) dans une unité de conditionnement de fluide pour produire un flux conditionné (215) ;
la condensation d'une seconde partie de la seconde vapeur à basse pression (207) et d'une seconde partie de la première vapeur à basse pression (206) dans un condenseur (221) pour produire un condensat ; et
le chauffage d'un solvant riche en CO₂ en utilisant le flux conditionné (215) dans un échangeur de chaleur (217) pour produire un solvant pauvre ;
dans laquelle l'unité de conditionnement de fluide comprend un compresseur (225) configuré pour recevoir la première partie de la seconde vapeur à basse pression (207) et la première partie de la première vapeur à basse pression (206) et pour produire un flux comprimé ;
dans laquelle en outre le condensat est reçu du condenseur (221) et pompé par une pompe à condensat (223), et dans laquelle un flux conditionné condensé (219) est reçu de l'échangeur de chaleur (217) et pompé par la pompe à condensat (223).

9. Méthode de la revendication 8, dans laquelle le flux comprimé est le flux conditionné (215), ou dans laquelle l'étape de conditionnement de la première partie de la seconde vapeur à basse pression (207) et de la première partie de la première vapeur à basse pression (206) comprend en outre :
le chauffage du flux comprimé produit par le compresseur (225) par contact d'échange de chaleur avec un flux de gaz de combustion en amont d'une unité de conditionnement de gaz de combustion pour produire le flux conditionné (215), ou
le chauffage d'un flux comprimé (226) par le compresseur (225) en utilisant un rechauffeur auxiliaire (229) pour produire le flux conditionné (215), ou
le mélange d'un flux comprimé (226) par le compresseur (225) et d'un second flux (211) pour produire le flux conditionné (215), et dans laquelle le second flux (211) a une pression qui est supérieure à une pression de la première et de la seconde vapeur à basse pression (206, 207).

10. Méthode de la revendication 6 ou 8, comprenant en outre la réduction d'une charge du condenseur (221).
